(19)

Europäisches Patentamt
European Patent Office
Office européen des brevets

(11) **EP 4 455 336 A1**

(12) **EUROPEAN PATENT APPLICATION**
published in accordance with Art. 153(4) EPC

(43) Date of publication:
**30.10.2024 Bulletin 2024/44**

(21) Application number: 23742910.5

(22) Date of filing: **18.01.2023**

(51) International Patent Classification (IPC):
**C22C 38/02** (2006.01)    **C22C 38/04** (2006.01)
**C22C 38/06** (2006.01)    **C22C 38/08** (2006.01)
**C22C 38/12** (2006.01)    **C22C 38/14** (2006.01)
**C22C 38/18** (2006.01)    **C22C 38/22** (2006.01)
**C22C 38/28** (2006.01)    **C22C 38/38** (2006.01)
**B21B 1/26** (2006.01)    **B21B 1/34** (2006.01)
**B21B 1/28** (2006.01)    **B21B 1/36** (2006.01)
**C21D 1/30** (2006.01)

(52) Cooperative Patent Classification (CPC):
**B21B 1/26; B21B 1/28; B21B 1/34; B21B 1/36;
B21B 1/38; B21C 37/08; C21D 1/30; C21D 8/10;
C22C 38/02; C22C 38/04; C22C 38/06;
C22C 38/08; C22C 38/12; C22C 38/14;
C22C 38/18;** (Cont.)

(86) International application number:
**PCT/CN2023/072769**

(87) International publication number:
**WO 2023/138595 (27.07.2023 Gazette 2023/30)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **21.01.2022 CN 202210084010**

(71) Applicant: BAOSHAN IRON & STEEL CO., LTD.
**Shanghai 201900 (CN)**

(72) Inventors:
- YAN, Bo
  **Shanghai 201900 (CN)**
- JIAO, Sihai
  **Shanghai 201900 (CN)**
- WANG, Zhiyu
  **Shanghai 201900 (CN)**
- LI, Zhanjie
  **Shanghai 201900 (CN)**

(74) Representative: **Nederlandsch Octrooibureau
P.O. Box 29720
2502 LS The Hague (NL)**

(54) **HIGH-STRENGTH PIPELINE RESISTANT TO SODIUM HYDROXIDE CORROSION AND MANUFACTURING METHOD THEREFOR**

(57) The present invention discloses a pipe, wherein the pipe has a corrosion-resistant layer and a base layer in the thickness direction, the corrosion-resistant layer being at least disposed on the inner wall of the pipe, and the corrosion-resistant layer further comprises, in addition to Fe and inevitable impurities, the following chemical elements in percentage by weight: $0 < C \leq 0.05\%$; Si: 0.3-0.6%; Mn: 0.5-2.0%; Ni: 8.00-14.00%; Cr: 16.00-19.00%; Mo: 2.00-3.50%; N: 0.02-0.20%; and Ti: 0.01-0.2%, and Cr, Mo, N, and Ti satisfy the following inequation: $Cr+2.8\times Mo+16\times N+2\times Ti \geq 22.0\%$. Correspondingly, the present invention further discloses a method for manufacturing the above pipe comprising the steps of: (1) preparing a corrosion-resistant layer slab and a base layer slab; (2) assembling the corrosion-resistant layer slab and the base layer slab to obtain a composite slab; (3) heating and rolling: heating the composite slab at a temperature of 1150-1230°C, wherein a total rolling reduction rate is not lower than 90%, and a finish rolling temperature is not lower than 900°C; (4) coiling: after water cooling, coiling at a temperature of 650-700°C to obtain a hot-rolled coil; (5) subjecting the hot-rolled coil to a surface treatment; and (6) making a pipe.

| Corrosion-resistant layer |
| Base layer |

Figure 2

(52) Cooperative Patent Classification (CPC): (Cont.)
  **C22C 38/22; C22C 38/28; C22C 38/38;**
  **C22C 38/44; C22C 38/50; C22C 38/58;**
  **F16L 58/08;** Y02E 30/30

**Description**

TECHNICAL FIELD

The present invention relates to a pipe and a manufacturing method therefor, in particular to a high-strength pipe resistant to sodium hydroxide corrosion and a manufacturing method therefor.

BACKGROUND ART

As well known in the art, in the current water supply plant site, in order to ensure the water quality, an alkali-washing process of a membrane pool is usually used for treatment. In an actual application process, a dosing pipeline, a flushing pipeline, and a pipeline from the membrane pool to the neutralization pool used in the alkali-washing process of the membrane pool are easily corroded by sodium hydroxide. Therefore, in order to prevent these pipelines from being corroded by sodium hydroxide as much as possible, 304 and 316L stainless steel materials are usually used to manufacture such pipelines.

Under this requirement, the above-mentioned pipelines and devices cannot be manufactured by carbon steel pipes: if carbon steel pipes are used, they will inevitably be corroded by sodium hydroxide, resulting in water pollution, and even pipeline leakage and pipeline bursting.

Compared with carbon steel, the structure of 304 and 316L stainless steel has lower strength. Under the same working conditions, the required thickness is higher, resulting in an increase in the amount of materials used; at the same time, the welding and machining of 304 and 316L stainless steel are more difficult; moreover, 304 and 316L stainless steel themselves contain many noble metal elements such as Cr, Ni, Mo, and the like, resulting in a relatively higher cost of pure stainless steel in the process of production, manufacture, and installation.

Based on above, considering the shortcoming and defect in the application of the above-mentioned 304 and 316L stainless steel and carbon steel in the sodium hydroxide corrosion environment, the present invention expects to obtain a new pipe. The pipe adopts a reasonable design, so it can have a corrosion resistant layer resistant to sodium hydroxide corrosion formed on the surface of the carbon steel base layer, and finally form a pipe having sodium hydroxide-corrosion resistance, good mechanical properties and high economic efficiency, and thus has great economic and social benefits.

SUMMARY OF THE INVENTION

One of the purposes of the present invention is to provide a new pipe. The pipe adopts a reasonable design, so it can have a corrosion resistant layer resistant to sodium hydroxide corrosion formed on the surface of the carbon steel base layer, and finally form a pipe having sodium hydroxide-corrosion resistance, good mechanical properties and high economic efficiency.

The pipe according to the present invention can solve the essential deficiency of 304, 316L stainless steel or carbon steel generated under the sodium hydroxide corrosive medium environment in the current water supply plant site, meet continuously increasing requirements for the corrosion resistance and mechanical properties of the pipe of the pipeline devices under the sodium hydroxide medium environment in the water supply plant site, and greatly improve the applicability, safety, and durability of the pipeline devices while avoiding secondary pollution of water quality, and thus has great economic and social benefits.

In order to achieve the above object, the present invention provides a pipe, wherein the pipe has a corrosion-resistant layer and a base layer in its thickness direction, and the corrosion-resistant layer is at least disposed on the inner wall of the pipe, and the corrosion-resistant layer further comprises, in addition to Fe and inevitable impurities, the following chemical elements in percentage by weight:

$$0 < \mathrm{C} \leq 0.05\%;$$

Si: 0.3-0.6%;
Mn: 0.5-2.0%;
Ni: 8.00-14.00%;
Cr: 16.00-19.00%;
Mo: 2.00-3.50%;
N: 0.02-0.20%; and
Ti: 0.01-0.2%;
wherein Cr, Mo, N and Ti satisfy the following inequality: Cr+2.8×Mo+16×N+2×Ti ≥ 22.0%.

Preferably, in the pipe according to the present invention, the corrosion-resistant layer consists of the following chemical elements in weight %:

$$0 < C \leq 0.05\%;$$

Si: 0.3-0.6%;
Mn: 0.5-2.0%;
Ni: 8.00-14.00%;
Cr: 16.00-19.00%;
Mo: 2.00-3.50%;
N: 0.02-0.20%;
Ti: 0.01-0.2%; and
the balance of Fe and inevitable impurities;
wherein Cr, Mo, N and Ti satisfy the following inequality: Cr+2.8×Mo+16×N+2×Ti ≥ 22.0%.

In the pipe according to the present invention, in order to ensure the sodium hydroxide corrosion resistance of the pipe, the sodium hydroxide corrosion resistance of the corrosion resistant layer should be ensured at first.

Currently, working conditions of the sodium hydroxide corrosive medium in the existing water supply plant site are: transport medium comprising sodium hydroxide having a mass concentration of 0-30% therein, and the temperature thereof is between 0-40°C.

Based on the above working conditions, the inventors have optimized the chemical element components of the corrosion-resistant layer in the pipe, wherein a certain amount of Ti element is added in particular, and a specialized corrosion-resistant equivalent formula and requirements are designed such that Cr, Mo, N and Ti are controlled to satisfy the formula: Cr+2.8×Mo+16×N+2×Ti ≥ 22.0% so as to further reduce susceptibility to intergranular corrosion, prevent stress corrosion of pipeline device in alkali washing process, and avoid corrosion of weld seam caused by sodium hydroxide solution when the temperature continues to be higher.

In the present invention, the design principle of each chemical element in the corrosion-resistant layer is as follows:

C: In the corrosion resistant layer according to the present invention, C is a strong austenite-forming element, which can replace nickel to a certain extent, promoting the formation of austenite, and stabilizing the austenite structure while increasing the strength of stainless steel. However, the content of C element should not be too high. When the carbon content is too high, after the carbon is combined with chromium, a chromium-rich carbide would be formed at the grain boundary, leading to intergranular corrosion. Therefore, in order to exert the beneficial effects of the C element, in the corrosion resistant layer according to the present invention, the mass percentage of the C element may be controlled to satisfy: 0 < C ≤ 0.05%.

Si: In the corrosion resistant layer according to the present invention, Si element is mainly used for deoxidation during the smelting process, so a certain amount of silicon typically needs to be added. However, it should be noted that the Si element content should not be too high. When the Si content is too high, the solubility of nitrogen will be reduced. Therefore, in the corrosion-resistant layer according to the present invention, the mass percentage of Si element may be controlled between 0.3-0.6%.

Mn: In the corrosion resistant layer according to the present invention, Mn element is an element that strongly stabilizes the austenitic structure, and can increase the solubility of nitrogen in steel. However, manganese has a negative impact on the corrosion resistance of austenitic stainless steel at the same time. Therefore, considering the beneficial effects and adverse effects of the Mn element, in the corrosion-resistant layer according to the present invention, the mass percentage of the Mn element may be controlled between 0.5-2.0%, preferably 1.0-2.0%, more preferably 1.0-1.36%.

Ni: In the corrosion resistant layer according to the present invention, Ni is the most important element that forms and stabilizes the austenite phase. By adding an appropriate amount of Ni element, the formation of austenite structure of the steel at room temperature can be ensured. However, the price of nickel is expensive, so in order to ensure a relatively low cost, it is not appropriate to add excessive nickel into the steel. Therefore, in the corrosion resistant layer according to the present invention, the mass percentage of Ni element may be controlled between 8.00-14.00%, preferably 8.00-10.00%.

Cr: In the corrosion resistant layer according to the present invention, Cr is a guarantee to obtain the rust resistance and corrosion resistance of the stainless steel. Generally, the minimum chromium content to obtain corrosion resistance is 10.5%. Since chromium is an element that significantly enhances corrosion resistance, in order to ensure good corrosion resistance, the content of chromium in the steel of the present invention is controlled to be 16.0% or more. However, it should be noted that chromium is also the main ferrite-forming element, and that if the content of chromium is too high, it will be difficult to guarantee that the corrosion resistant layer can obtain austenite structure at the room temperature. Therefore, in the corrosion resistant layer according to the present invention, the mass percentage of Cr element may be controlled between 16.00-19.00%.

Mo: in the corrosion resistant layer according to the present invention, Mo is an important element that improves corrosion resistance, and its mechanism is to stabilize a passivation film and promote the enrichment of chromium in the passivation film; in addition, molybdenum can also cooperate with nitrogen to further improve pitting corrosion resistance, so the main effect of adding molybdenum is to improve corrosion resistance. However, the Mo element content should not be too high. If the content of molybdenum is too high, it will increase the cost of the alloy. Therefore, in order to ensure a relatively low cost, in the corrosion resistant layer according to the present invention, the mass percentage of Mo element may be controlled between 2.00-3.50%, preferably 2.00-3.00%.

N: In the corrosion resistant layer according to the present invention, N is an element that very strongly forms, stabilizes and expands the austenite zone. By adding an appropriate amount of N element, pitting corrosion resistance of the stainless steel can be effectively improved. However, when the nitrogen content in the steel is too high, it will increase the risk of nitrogen-containing intermetallic phase formation, and at the same time increase the difficulty of smelting and hot processing, leading to difficulty in production. Therefore, in the corrosion resistant layer according to the present invention, the mass percentage of N element may be controlled between 0.02-0.20%, preferably 0.02-0.10%.

Ti: In the corrosion resistant layer according to the present invention, Ti is an element that stabilizes titanium compound and nitrogen compound. By adding an appropriate amount of Ti element in the steel, the decrease in corrosion resistance caused by the reduction of chromium concentration due to the formation of compounds between chromium and carbon can be effectively prevented; in addition, by adding an appropriate amount of Ti element, pitting corrosion caused by MnS can be also prevented. However, the Ti element content in the steel should not be too high. When the Ti element content in the steel is too high, it will not only increase the risk of forming intermetallic phases containing titanium and nitrogen, but also reduce the thermoplasticity of the steel and increase the difficulty of smelting and hot processing, leading to difficulty in production. Therefore, in the corrosion resistant layer according to the present invention, the mass percentage of Ti element may be controlled between 0.01-0.2%, preferably 0.1-0.2%.

Correspondingly, in the corrosion resistant layer of the pipe according to the present invention, while controlling the mass percentage of a single chemical element alone, the elements Cr, Mo, N and Ti are further controlled to satisfy the formula: $Cr+2.8\times Mo+16\times N+2\times Ti\geq 22.0\%$. Each element in the formula is substituted into the mass percentage of the corresponding element. Through such control, it can be further ensured that the corrosion-resistant layer has a rather excellent corrosion resistance in the sodium hydroxide environment.

Preferably, in the pipe according to the present invention, in the corrosion resistant layer, the inevitable impurities include: $S\leq 0.030\%$; $P\leq 0.045\%$.

In the corrosion resistant layer of the pipe according to the present invention, both P and S are inevitable impurity elements. In order to ensure the quality of the steel, the content of the impurity elements in the steel is preferably as low as possible, if conditions permit.

Preferably, in the pipe according to the present invention, the base layer comprises the following chemical elements in percentage by weight:

C: 0.01-0.20%;
Si: 0.10-0.30%;
Mn: 0.50-1.50%;
Al: 0.02-0.03%;
Ti: 0.005-0.018%;
Nb: 0.005-0.020%;

$$N \leq 0.006\%;$$

and
the balance of Fe and inevitable impurities.

Preferably, in the pipe according to the present invention, the base layer further comprises at least one of the following chemical elements:

$$0 < B \leq 0.0003\%;$$

$$0 < Ni \leq 0.20\%;$$

$$0 < Cr \leq 0.20\%;$$

$$0 < Mo \leq 0.10\%.$$

In the present invention, in order to ensure that the pipe according to the present invention can obtain higher mechanical properties, the choice of chemical element components of carbon steel in the base layer needs to ensure both high strength and good processability.

Thus, in the present invention, the design principle of each chemical element of carbon steel in the base layer is as follows:

C: In the base layer according to the present invention, C is an element that stabilizes austenite, which can achieve the effect of solid solution strengthening in steel, and can obviously improve the strength of steel. At the same time, the content of C element in the steel should not be too high. When the content of C element in the steel is too high, it is not only unfavorable to the welding performance and toughness of the material, but also prone to increase the hard phase structure such as pearlite structure and martensite-austenite island, which will adversely affect the corrosion resistance of the steel. Therefore, considering the strength and toughness alignment of the steel plate and the requirement for the corrosion resistance of the carbon steel material, in the base steel material according to the present invention, the mass percentage of the C element may be controlled between 0.01-0.20%, preferably 0.10-0.20%.

Si: In the base layer according to the present invention, by adding Si element to the steel, the purity and deoxidation of the steel can be effectively improved. Si element can provide the effect of solid solution strengthening in steel, but Si element is not conducive to the welding performance of the material; in the present invention, the silicon content of carbon steel in the base layer is controlled to be less than or equal to 0.3%, which will not have any impact on the corrosion resistance of the corrosion resistance layer, and in such case, carbon steel in the base layer has good welding performance. Therefore, in the base layer according to the present invention, the mass percentage of Si element may be controlled between 0.10-0.30%.

Mn: In the base layer according to the present invention, by adding an appropriate amount of Mn element in the steel, the pearlite transformation can be postponed, the critical cooling rate can be reduced, and the hardenability of the steel can be improved; at the same time, the Mn element also has the effect of solid solution strengthening, which is the main solid solution strengthening element in the steel. However, it should be noted that the Mn element should not be added too much. When the Mn element content in the steel is too high, a segregation band and a martensitic structure are prone to appear, which have an adverse effect on the toughness of the steel, and the appearance of the segregation band will also reduce the corrosion resistance of the steel. The amount of Mn added mainly depends on the strength level of the steel. Generally, the manganese content in low-carbon micro-alloyed steel does not exceed 1.50%. At this time, the Mn element contained in carbon steel of the base layer will not have adverse effects on the corrosion resistant layer. Therefore, in the base layer according to the present invention, the mass percentage of Mn element may be controlled between 0.50-1.50%, preferably 1.00-1.50%.

Al: In the base layer according to the present invention, Al is a strong deoxidizing element. Al is added to ensure that the oxygen content in the steel is as low as possible. After deoxidation, the excess Al element and N element in the steel can combine to form AlN precipitates, thereby improving the strength of the steel and refining the austenite grain size of the steel during heat treatment. However, it should be noted that if the Al content is too high, it is easy to generate Al oxide inclusion defects. Therefore, in the base layer according to the present invention, the mass percentage of Al element may be controlled between 0.02-0.03%.

Ti: In the base layer according to the present invention, Ti is a strong carbide-forming element. By adding a small amount of Ti in the steel, it is conducive to fix N in the steel. TiN formed by the combination of Ti and N may prevent excessive growth of austenite grains during heating of slab materials in the base layer, thereby refining the initial austenite grains. In addition, titanium in steel may also react with carbon and sulfur to form substances such as TiC, TiS, and $Ti_4C_2S_2$, respectively, which exist in the form of inclusions and second phase particles. Further, these carbon nitride precipitates of titanium may prevent grain growth in the heat affected zone during welding, thereby improving the welding performance. However, it should be noted that if the Ti content is too high, it will lead to a greater number of carbides such as titanium carbide, and segregation and enrichment thereof, affecting the mechanical properties of the material. Therefore, in the base layer according to the present invention, the mass percentage of Ti element may be controlled between 0.005-0.018%.

Nb: In the base layer according to the present invention, Nb is a strong carbide -forming element. A small amount of Nb is added into the steel mainly for increasing the recrystallization temperature to adapt the high finish rolling temperature of the composite plate formed by assembly between the base layer slab and the corrosion-resistant layer slab during the subsequent rolling process, so that grains can be refined after rolling in the recrystallization and non-recrystallization regions is completed, thereby improving the low-temperature impact toughness of the base layer. However, it should be noted that if the Nb content is too high, it is prone to produce large-sized Nb-rich precipitates, resulting in reduction to the plasticity and toughness of the material. Therefore, in the base layer according to the present invention, the mass percentage of Nb element may be controlled between 0.005-0.020%.

N: In the base layer according to the present invention, N element can combine with titanium and aluminum to form second phase particles, which refine grains and improve strength. However, when the mass percentage of N element is too high, the amount of TiN obtained will be too high and the particle will be too coarse, leading to influence on the plasticity of the base carbon plate of the composite material according to the present invention. Therefore, in the base layer according to the present invention, the mass percentage of N element may be controlled to be $N \leq 0.006\%$.

B: In the present invention, B can greatly improve the hardenability of steel. For the case wherein the high corrosion-resistant composite plate (a corrosion resistant layer slab + a base layer slab) is subjected to air cooling after rolling, it is required to obtain ferrite + pearlite structure as much as possible to suppress the formation of bainite, especially for high corrosion resistant sheet steel strip in which the single-layer thickness of the corrosion resistant layer accounts for 0.5%-20% of the total thickness. However, it should be noted that when the B content is too high, segregation will easily occur. Therefore, in the base layer according to the present invention, the amount of B element added may be $0 < B \leq 0.0003\%$.

Ni: In the present invention, Ni is an element that stabilizes austenite, and it has a certain effect on improving the strength of steel. In addition, by adding an appropriate amount of Ni in steel, especially adding an appropriate amount of Ni in quenched and tempered steel, the low temperature impact toughness of steel can be greatly improved. However, it should be noted that when Ni content is too high, it will increase the carbon equivalent, thereby affecting the welding performance; at the same time, Ni is a rare metal, resulting in waste of resources and increase in cost. Therefore, in the base layer according to the present invention, the amount of Ni element added may be controlled to satisfy: $0 < Ni \leq 0.20\%$.

Cr: In the present invention, the segregation tendency of the Cr element is smaller than that of Mn. When the Mn content of carbon steel in the base layer is high, and when there are obvious segregation band and strip-like structure in the steel, the Mn content may be appropriately reduced, wherein the insufficient part can be replaced by Cr. Secondly, by adding an appropriate amount of Cr element in carbon steel in the base layer, it is also beneficial to inhibit the diffusion of Cr in the corrosion resistant layer to the base layer. However, it should be noted that when Cr content is too high, it will affect the phase transition temperature of the substrate and affect the mechanical properties of the substrate. Therefore, in the base layer according to the present invention, the Cr element may be added in $0 < Cr \leq 0.20\%$.

Mo: In the present invention, Mo element can significantly refine grains and improve the strength and toughness of steel. In addition, Mo can also reduce the temper brittleness of steel, and at the same time, very fine carbides can be precipitated during tempering, thereby significantly strengthen the steel matrix. In addition, the addition of Mo element is also beneficial to suppress the self-temper brittleness of the steel plate that is easy to occur during the air-cooling process. However, it should be noted that when Mo content is too high, it will increase the carbon equivalent, affect welding performance, and lead to resource waste and cost increase. Therefore, in the base layer according to the present invention, the amount of Mo element added is controlled to satisfy: $0 < Mo \leq 0.10\%$.

Preferably, in the pipe according to the present invention, in the base layer, the inevitable impurities include: $S \leq 0.010\%$; $P \leq 0.015\%$.

In the above technical solution of the present invention, both P and S are inevitable impurity elements in the base layer. S combines with Mn in the steel to form plastic inclusion, i.e., manganese sulfide, which is especially unfavorable to the plasticity and toughness of the steel in transverse direction. Therefore, the content of S element in the base layer should be as low as possible. In addition, P is also a harmful element in steel, which seriously damages the plasticity and toughness of the steel plate.

Therefore, for the present invention, both S and P are inevitable impurity elements, and the content thereof should be as low as possible. Considering the actual steelmaking level of the steel plant, in the base layer according to the present invention, S and P elements may be controlled to satisfy: $S \leq 0.010\%$; $P \leq 0.015\%$.

Preferably, in the pipe according to the present invention, the single-layer thickness of the corrosion-resistant layer accounts for 0.5-20% of the total thickness of the pipe, more preferably, the single-layer thickness of the corrosion-resistant layer accounts for 1.2%-16.7% of the total thickness of the pipe. That is to say, if both the inner surface and the outer surface of the pipe have the corrosion resistant layer, each corrosion resistant layer has a thickness accounting for 0.5-20% of the total thickness of the pipe. If only the inner surface of the pipe has a corrosion resistant layer, the corrosion resistant layer has a thickness accounting for 0.5-20% of the total thickness of the pipe.

In the present invention, the thickness of the corrosion-resistant layer is selected depending on the working conditions, which plays a crucial role in obtaining good corrosion resistance, mechanical properties and formability of the pipe according to the present invention. When the corrosion-resistant layer is too thick, it will affect the mechanical properties of the material and production cost; and when the corrosion-resistant layer is too thin, it will reduce the corrosion resistance and service life of the material. Therefore, in the present invention, preferably, the thickness of the single-layer corrosion resistant layer is controlled to account for 0.5-20% of the total thickness of the pipe, and more preferably the single-layer corrosion resistant layer has a thickness accounting for 1.2-16.7% of the total thickness of the pipe.

Preferably, in the pipe according to the present invention, the base layer has a microstructure of ferrite+pearlite, or ferrite+pearlite+bainite; and the corrosion resistant layer has a microstructure of austenite.

Preferably, in the pipe according to the present invention, the pipe has a yield strength of ≥ 426MPa, a tensile strength of ≥ 585MPa, and an elongation rate of ≥ 35%, and the corrosion-resistant layer has a uniform corrosion rate (i.e., an average corrosion rate) of ≤ 0.05mm/year in an environment with a temperature of ≤ 40°C and a sodium hydroxide concentration of ≤ 30wt%.

Correspondingly, another object of the present invention is to provide a method for manufacturing the above-mentioned pipe. This method is simple and feasible, and can effectively produce the above-mentioned pipe.

In order to achieve the above object, the present invention provides a method for manufacturing the above-mentioned pipe, wherein the method comprises the steps of:

(1) providing a slab for a corrosion-resistant layer and a slab for a base layer;

(2) assembling the slab for a corrosion-resistant layer and the slab for a base layer to obtain a composite slab, wherein preferably the single-layer thickness of the corrosion resistant layer accounts for 0.5-20% of the total thickness of the composite slab, and more preferably the single-layer thickness for the corrosion resistant layer accounts for 1.2-16.7% of the total thickness of the pipe (the ratio of the thickness of the single-layer corrosion-resistant layer/the total thickness of the pipe in the finished pipe is substantially the same as the thickness ratio in this step);

(3) heating and rolling: heating the composite at a temperature of 1150-1230°C, followed by performing rolling in multiple passes, with a total rolling reduction rate of not lower than 90%, and a finish rolling temperature of not lower than 900°C;

(4) coiling: after water cooling, coiling at a temperature of 650-700°C to obtain a hot-rolled coil;

(5) subjecting the hot-rolled coil to a surface treatment; and

(6) making a pipe.

In the above-mentioned manufacturing method according to the present invention, a high corrosion resistant composite plate (corrosion resistant layer plate + base layer plate) can be obtained by the following method: smelting and casting are designed according to the chemical composition to prepare the corrosion resistant layer slab and the base layer slab, and then the two slabs are assembled. The high corrosion-resistant composite plate obtained is further heated, rolled, and coiled to obtain a hot-rolled coil having a composite interlayer structure. After the hot-rolled coil is subjected to a surface treatment, a pipe-making is performed to obtain the pipeline according to the present invention.

In the present invention, the inventors have optimized the heating and rolling process in step (3) to ensure that a transition layer structure having a certain thickness can be formed between the corrosion resistant layer and the base layer by heating, rolling, and the like, so that the complete metallurgical combination of the corrosion resistant layer and the base layer can be realized, thereby improving the applicability and economy of the material while ensuring the sodium hydroxide corrosion-resistance and mechanical properties.

In the step (2) of the manufacturing method according to the present invention, the corrosion-resistant layer slab and the base slab prepared may be pretreated, and the bonding surface of the slab is sealed by welding all around, and the welded and sealed bonding surface is vacuumized to complete slab assembly.

Correspondingly, in step (5), a surface treatment is carried out on the hot-rolled coil, wherein pickling or mechanical methods can be used to remove phosphorous. In addition, in the process of pipe making of step (6), the conventional methods of spirally welding pipe or longitudinally welding pipe can be used to form and weld. The welding method can be selected from a submerged arc welding, a gas metal arc welding, a tungsten inert gas welding, a plasma arc welding, a shielded metal arc welding, a high-frequency welding or a laser welding.

Preferably, in the manufacturing method according to the present invention, in step (3), the finish rolling temperature is controlled to be 920-1050°C.

Preferably, in the manufacturing method according to the present invention, the method further comprises a preheating step between step (2) and step (3), wherein the preheating temperature is 1150-1230°C.

In the manufacturing method according to the present invention, it is also possible to determine whether or not a preheating process is selected between step (2) and step (3) depending on the performance requirements of the final product. In the preheating process, the composite slab obtained by slab assembly may be heated at a temperature of 1150-1230°C, so that the corrosion resistant layer on the surface of the composite slab can obtain a uniform austenitized structure; such that the carbides that may exist originally is completely dissolved as much as possible, while the compounds of alloying elements such as niobium and titanium in carbon steel are completely or partially dissolved; and such that elements of the corrosion resistance layer and the carbon steel base layer are diffused at the interface to form a stable transition layer, and then slowly cooled to room temperature.

Preferably, in the manufacturing method according to the present invention, the method further comprises a cold rolling and annealing step between step (5) and step (6), preferably, at an annealing temperature of 900-1000°C.

In the manufacturing method of the present invention, in actual use, if the target product before pipe making is a cold-rolled coil other than a hot-rolled coil, the method can further comprise a cold rolling and annealing step between step (5) and step (6). The hot-rolled coil can be cold-rolled to the target thickness, then subject to annealing.

It can be seen from the above that in the present invention, the inventors can finally obtain a plate strip having the sodium hydroxide corrosion resistance, good mechanical properties and high economic efficiency by designing the composition of the corrosion resistant layer and the base layer, designing the compounding ratio of the two, and using a rolling process to form a corrosion-resistant layer resistant to sodium hydroxide on the surface of the carbon steel plate of the base layer, and then process the plate strip into a pipe for pipeline devices used in the environment of sodium hydroxide corrosive medium in water supply plant site.

It should be noted that, in the design process of the present invention, the difficulties include:

1) The composition design of the corrosion resistant layer and the base layer needs to meet the comprehensive performance of the material. The composition of the corrosion resistant layer needs to be designed according to the characteristics of sodium hydroxide corrosion to meet the requirements of corrosion resistance under service conditions. When designing the carbon steel composition of the base layer, in addition to meeting the requirements of mechanical properties, it is also necessary to consider that when the carbon content of the transition layer obtained by combining the base layer and the corrosion resistant layer is relatively high, if there is a lack of stabilizing element, there will be an obvious decarburization layer on the side of the carbon steel at the interface bond, resulting in uneven structure of the carbon steel base material, easy formation of surface defects after processing, and difficulty in meeting the mechanical performance requirements.

2) The metal ratio and the difference in material properties of the corrosion resistant layer and the base layer will make it difficult to control the heating process, rolling process, and heat treatment process. For example, if the temperature is not uniform during the heating process, it will lead to deformation and swelling. As a result, it is impossible to combine the corrosion resistant layer with the base layer. For example, the corrosion resistant layer is easy to separate from the base layer and crack during the rolling process. As a result, it is difficult to ensure the uniformity of thickness.

3) For the pipeline device used in the environment of sodium hydroxide corrosive medium in the water supply plant site, such as the dosing pipeline, flushing pipeline, pipeline from the membrane pool to the neutralization pool and the like in alkali-washing process of the membrane pool, if the early composite is not completed and the bonding quality is not good, the continuity and uniformity of the corrosion resistance layer of the finished pipeline after the subsequent pickling, pipe forming, welding and other process cannot be guaranteed, which will cause huge potential dangers to the applicability, safety and durability of device and pipeline.

In the present invention, by means of reasonable design, the inventors succeeded to overcome the above-mentioned difficulties and obtain the pipe as described in the present invention.

Compared with the prior art, the pipe according to the present invention and the manufacturing method therefor have the following advantages and beneficial effects:

In the present invention, the inventor contemplated that depending on working conditions of the pipeline device when used in the environment of sodium hydroxide corrosive medium in current water supply plant site, by designing the composition of the corrosion-resistant layer and the base layer and designing the ratio of both, assembling the corrosion resistant layer and the base layer and combined with suitable heating, rolling, and coiling processes while cooperating with the pipe-making process to obtain a pipe having the sodium hydroxide corrosion resistance, good mechanical properties and high economic efficiency wherein the pipeline has a yield strength of $\geq 426$MPa, a tensile strength of $\geq$ 585MPa, and an elongation of rate $\geq 35\%$, and the corrosion-resistant layer has an average corrosion rate of $\leq$ 0.05mm/year in an environment with a temperature of $\leq 40$°C and a sodium hydroxide concentration of $\leq 30$wt%.

In the present invention, a transitional layer structure having a certain thickness is formed between the corrosion resistant layer and the base layer by means of processes such as heating and rolling and the like, a thus the complete metallurgical bonding of the corrosion resistant layer and the base layer is realized so that the suitability and economy of the materials are improved while ensuring the sodium hydroxide corrosion resistance and mechanical properties.

The pipe manufactured by using the above-mentioned composition design and process control method can solve the essential deficiency of 304, 316L stainless steel or carbon steel generated under the sodium hydroxide corrosive medium environment in the water supply plant site; The pipe can be effectively applied to the pipeline device used in the sodium hydroxide medium environment in the water supply plant site, such as dosing pipeline, flushing pipeline, and pipeline from the membrane pool to the neutralization pool in the alkali-washing process of the membrane pool, and can meet the requirements for the sodium hydroxide corrosion resistance and mechanical properties of the pipelines and the devices, which can greatly improve the applicability, safety, and durability of the pipeline devices while avoiding secondary pollution of water quality, and thus has great economic and social benefits.

Compared with the current 304 and 316L stainless steel pipeline used in the dosing pipeline, the flushing pipeline, and the pipeline from the membrane pool to the neutralization pool and the like in the alkali-washing process of the membrane pool in the water supply plant site, the pipe according to the present invention has high strength, simple welding and mechanical processing, and high economic efficiency. Compared with carbon steel pipe, the steel plate/steel strip of the pipe according to the present invention can dispense with the pipeline corrosion-resistant coating process, and at the same time have the corrosion resistance and durability that are hard for a carbon steel pipe to reach, and are more energy-saving, environment-friendly and maintenance-free.

BRIEF DESCRIPTION OF THE DRAWINGS

Fig. 1 is a schematic diagram of the interlayer structure of the pipe according to the present invention in an embodiment.
Fig. 2 is a schematic diagram of the interlayer structure of the pipe according to the present invention in another embodiment.
Fig. 3 and Fig. 4 are microstructure photographs showing the bonding interface between the base layer and the corrosion resistant layer of the pipe in Example 3.

DETAILED DESCRIPTION OF THE EMBODIMENTS

The pipe and the manufacturing method therefor as described in the present invention will be further explained and described below with reference to specific embodiments/examples, however, the explanation and description do not constitute inappropriate definition to the technical solution of the present invention.

**Examples 1-7**

The mass percentages of the chemical elements in the corrosion resistant layers in the pipes of Examples 1-7 are listed in Table 1.

Table 1 (wt %, the balance is Fe and other inevitable impurities except for P and S)

|  | C | Si | Mn | Ni | Cr | Mo | N | Ti | S | P | Cr+2.8×Mo+16×N+2×Ti |
|---|---|---|---|---|---|---|---|---|---|---|---|
| Example 1 | 0.005 | 0.50 | 1.20 | 9.30 | 18.2 | 2.52 | 0.1 | 0.2 | 0.001 | 0.030 | 27.256 |
| Example 2 | 0.020 | 0.30 | 2.00 | 8.05 | 19 | 2.02 | 0.2 | 0.015 | 0.001 | 0.028 | 27.886 |
| Example 3 | 0.026 | 0.37 | 1.36 | 8.56 | 18.3 | 2.26 | 0.05 | 0.16 | 0.003 | 0.035 | 25.748 |
| Example 4 | 0.050 | 0.60 | 0.50 | 14.00 | 16 | 3 | 0.02 | 0.1 | 0.030 | 0.045 | 24.92 |
| Example 5 | 0.015 | 0.45 | 1.10 | 10.18 | 16.7 | 2.36 | 0.08 | 0.15 | 0.002 | 0.032 | 24.888 |
| Example 6 | 0.014 | 0.50 | 1.00 | 10.00 | 16.5 | 2 | 0.05 | 0.15 | 0.001 | 0.030 | 23.2 |
| Example 7 | 0.014 | 0.50 | 1.00 | 10.00 | 16 | 3.5 | 0.05 | 0.15 | 0.001 | 0.030 | 26.9 |

Note: In Table 1, each element in the formula Cr+2.8×Mo+16×N+2×Ti is substituted into the mass percentage of the corresponding element.

The mass percentages of the chemical elements in the base layers in the pipes of Examples 1-7 are listed in Table 2.

Table 2 (wt %, the balance is Fe and other inevitable impurities except for P and S)

|  | C | Si | Mn | A1 | Ti | Nb | N | B | Ni | Cr | Mo | S | P |
|---|---|---|---|---|---|---|---|---|---|---|---|---|---|
| Example 1 | 0.10 | 0.10 | 1.50 | 0.020 | 0.018 | 0.020 | 0.0045 | 0.0003 | - | - | 0.10 | 0.005 | 0.010 |
| Example 2 | 0.14 | 0.25 | 1.00 | 0.030 | 0.014 | 0.011 | 0.0052 | 0.0002 | - | 0.20 | - | 0.005 | 0.010 |
| Example 3 | 0.01 | 0.30 | 1.20 | 0.030 | 0.010 | 0.018 | 0.0060 | 0.0002 | 0.20 | - | - | 0.010 | 0.015 |
| Example 4 | 0.20 | 0.15 | 0.50 | 0.020 | 0.005 | 0.005 | 0.0040 | 0.0001 | - | 0.10 | - | 0.004 | 0.008 |
| Example 5 | 0.11 | 0.30 | 1.48 | 0.026 | 0.008 | 0.010 | 0.0038 | - | - | - | - | 0.005 | 0.008 |
| Example 6 | 0.05 | 0.25 | 0.70 | 0.030 | 0.010 | 0.018 | 0.0060 | 0.0002 | 0.20 | - | - | 0.010 | 0.015 |
| Example 7 | 0.05 | 0.25 | 0.70 | 0.030 | 0.010 | 0.018 | 0.0060 | 0.0002 | 0.20 | - | - | 0.010 | 0.015 |

In the present invention, the pipes of Examples 1-7 of the present invention are all manufactured by the following steps:

(1) Smelting and casting according to the chemical composition shown in Table 1 and Table 2 to prepare a slab for the corrosion resistant layer and a slab for the base layer slab respectively.
(2) Assembling the slab for the corrosion resistant layer and the slab for the base layer to obtain a composite slab: controlling the single-layer thickness of the corrosion resistant layer to be 0.5-20% of the total thickness of the composite slab (the ratio of the single-layer thickness of the corrosion resistant layer/total thickness of the pipe in the finished pipe is basically the same as the thickness ratio in this step), subjecting the prepared corrosion-resistant layer slab and the base slab to a pretreatment, and sealing by welding the bonding surface of the slab all around, and then vacuuming the bonding surface after sealed by welding; determining whether or not the pre-heating process is selected according to the performance requirements of the finished product after assembling bland materials. If pre-heating is required, the pre-heating temperature may be further controlled to be 1150-1230°C.
(3) heating and rolling: heating the composite slab at a temperature of 1150-1230°C, followed by performing rolling in multiple passes within the austenite recrystallization and non-recrystallization temperature range of the base layer slab and the corrosion resistant layer slab, wherein a total rolling reduction rate is controlled to be not lower than 90%, and a finish rolling temperature is controlled to be not lower than 900°C, for example, the finish rolling temperature is controlled to be between 920-1050°C;
(4) coiling: after water cooling, coiling at a temperature of 650-700°C to obtain a hot-rolled coil;
(5) subjecting the hot-rolled coil to a surface treatment by means of pickling or mechanical methods to remove phosphorous, if the target product is a cold-rolled coil, a cold rolling and annealing process can further be performed, wherein annealing is performed after cold rolling to the target thickness, and the annealing temperature is 900-1000°C.
(6) making a pipe: the method of spirally welding pipe or the method of longitudinally welding pipe is used to form and weld. The welding method can be selected from a submerged arc welding, a gas metal arc welding, a tungsten inert gas welding, a plasma arc welding, a shielded metal arc welding, a high-frequency welding or a laser welding to prepare a pipe.

It should be noted that, in the present invention, the pipes of Examples 1-7 of the present invention are all produced by the process of the above-mentioned step (1)-step (6), and their chemical composition and related process parameters all meet the control requirements of the design specification of the present invention.
The specific process parameters of the pipes of Examples 1-7 in the steps of the above-mentioned manufacturing method are listed in Table 3.

Table 3

| No. | Step(2) Thickness of single-layer corrosion resistant layer / total thickness of composite slab (%) | Preheating temperature (°C) | Heating temperature (°C) | Step(3) Total rolling reduction rate in rolling (%) | finish rolling temperature (°C) | Step(4) Coiling temperature | Thickness of hot-rolled plate (mm) | Thickness of corrosion resistant layer of hot-rolled plate (μm) | Step(5) Cold rolling and annealing Temperature (°C) | Thickness of cold-rolled plate (mm) | Thickness of corrosion resistant layer of cold-rolled plate (μm) |
|---|---|---|---|---|---|---|---|---|---|---|---|
| Example 1 | 1.2% | 1160 | 1150 | 99.7 | 920 | 650 | 4 | 50 | 950 | 1.0 | 12 |
| Example 2 | 16.7% | 1230 | 1160 | 98.3 | 1000 | 650 | 6 | 1000 | - | - | - |
| Example 3 | 4.2% | 1230 | 1170 | 99.6 | 980 | 690 | 4 | 100 | 1000 | 1.2 | 50 |
| Example 4 | 1.3% | 1180 | 1220 | 99.4 | 1020 | 680 | 4 | 50 | 900 | 2.0 | 25 |
| Example 5 | 16.7% | 1200 | 1180 | 96.7 | 980 | 650 | 12 | 2000 | - | - | - |
| Example 6 | 14.3% | 1200 | 1180 | 96.1 | 980 | 650 | 14 | 2000 | - | - | - |
| Example 7 | 20% | 1200 | 1180 | 96.1 | 980 | 650 | 14 | 2800 | - | - | - |

It should be noted that, according to the process parameters shown in the above Table 3, after the surface treatment of the hot-rolled coil in step (5) in Example 1, Example 3 and Example 4, cold rolling and annealing were further carried out, which can correspondingly obtain cold-rolled plates; while hot-rolled plates were obtained by step (5) in Examples 2, 5, 6 and 7 without performing cold rolling and annealing.

Correspondingly, the plates prepared according to the various examples can further prepare corresponding pipes in the process for making the pipe in step (6).

The finished pipes, i.e., the pipes of Examples 1-7 prepared by the above process were sampled, respectively, and the microstructures in the sample pipes of Examples 1-7 were further observed. After observing the microstructures of the pipes of each example, the mechanical properties and sodium hydroxide corrosion resistance of the sample pipelines of Examples 1-7 could be further tested. The obtained test results are listed in the following Table 4.

Relevant performance testing methods are as follows:
Mechanical performance test: was carried out according to GB/T 6396-2008 "Clad steel plates -- Mechanical and technological test", from which the yield strength, tensile strength and elongation of the sample pipes in Examples 1-7 can be obtained.

Sodium hydroxide corrosion resistance test: Each coupon in Example 1-7 was placed in the pipe in the alkali washing process of the membrane pool in the water supply plant (in the environment with a temperature of $\leq 40$ °C and a sodium hydroxide concentration of $\leq 30wt\%$), and taken out to observe the surface condition of the corrosion resistance layer after 3 months and examine the corrosion weight loss to determine whether there was any corrosion phenomenon. The annual corrosion rate of each Example was calculated. Thus, the sodium hydroxide corrosion resistance of the sample pipes in Examples 1-7 can be obtained.

The test results of the microstructure, mechanical properties and sodium hydroxide corrosion resistance of the pipes of Examples 1-7 are listed in Table 4.

Table 4

| No. | Yield strength (MPa) | Tensile strength (MPa) | Elongation rate (%) | Average corrosion rate (mm/year) | Microstructure | |
|---|---|---|---|---|---|---|
| | | | | | Base layer | Corrosion resistance layer |
| Example 1 | 472 | 611 | 35.8 | 0.01 | ferrite + pearlite + bainite | austenite |
| Example 2 | 507 | 649 | 36.0 | 0.03 | ferrite + pearlite + bainite | austenite |
| Example 3 | 426 | 585 | 39.0 | 0.01 | ferrite + pearlite + bainite | austenite |
| Example 4 | 480 | 650 | 40.0 | 0.01 | ferrite + pearlite + bainite | austenite |
| Example 5 | 482 | 638 | 38.0 | 0.04 | ferrite + pearlite | austenite |
| Example 6 | 485 | 650 | 37.5 | 0.03 | ferrite + pearlite | austenite |
| Example 7 | 475 | 620 | 37.5 | 0.03 | ferrite + pearlite | austenite |

It can be seen from the above Table 4 that in the present invention, the pipes of Examples 1-7 have the yield strength between 426-507MPa, the tensile strength between 585-650MPa, and the elongation rate between 35.8-40.0%, and the annual corrosion rate of sodium hydroxide in the test environment is $\leq 0.04mm/year$.

It can be seen from the above examples that the present invention can obtain a pipe having good corrosion resistance and mechanical properties through appropriate material selection, composition design, rolling and heat treatment processes in combination with the pipe-making process. The pipe in the present invention can solve the essential deficiency of 316L stainless steel or carbon steel generated under sodium hydroxide corrosive medium environment in the current water supply plant site, and meet continuously increasing requirements for the corrosion resistance and mechanical properties of the pipe of the pipeline devices used in the sodium hydroxide medium environment in the water supply plant site, and thus has great economic and social benefits.

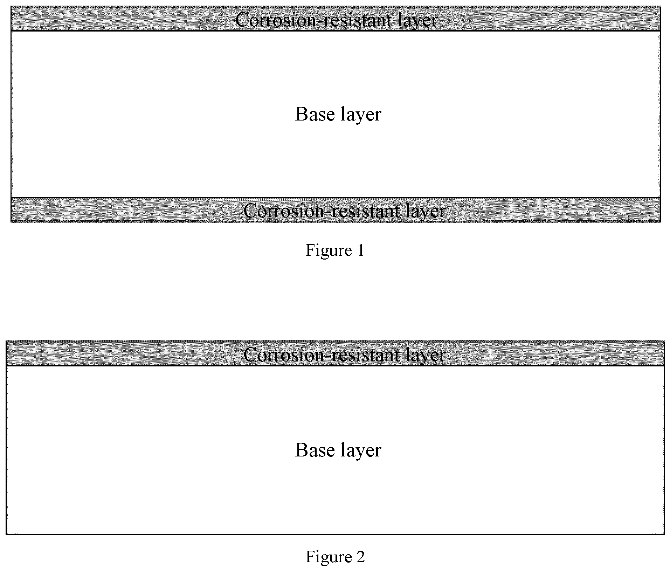

FIG. 1 is a schematic diagram of the interlayer structure of the pipe according to the present invention in an embodiment.

As shown in FIG. 1, in this embodiment, the pipe according to the present invention may include: two corrosion-resistant layers on the inner surface and the outer surface of the pipe and a carbon steel base layer in the middle.

FIG. 2 is a schematic diagram of the interlayer structure of the pipe according to the present invention in another embodiment.

As shown in FIG. 2, in this embodiment, the pipe according to the present invention may include: a corrosion-resistant layer on the inner surface of the pipe and a carbon steel base layer on the outer surface of the pipe.

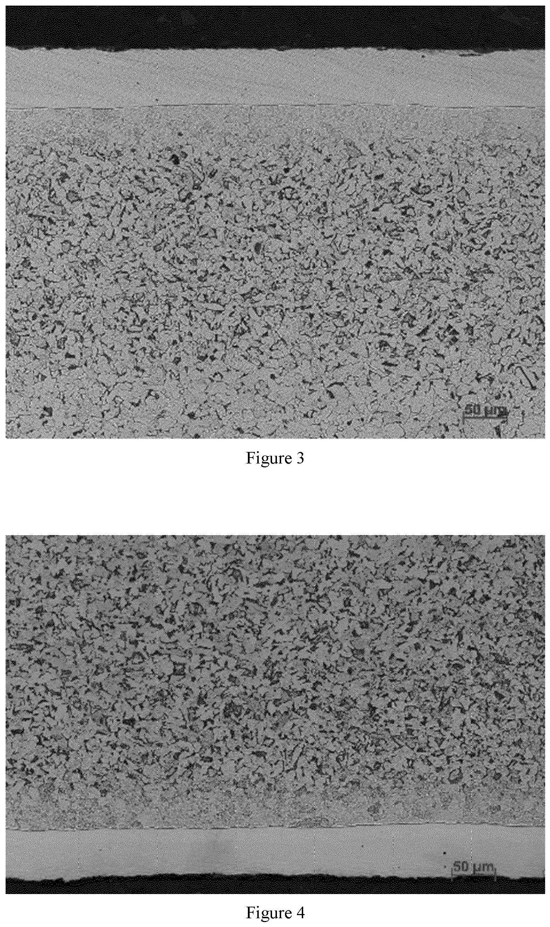

FIG. 3 and FIG. 4 are microstructure photographs showing the bonding interface between the base layer and the corrosion resistant layer of the pipe in Example 3.

As shown in FIG. 3 and FIG. 4, in Example 3, the pipe has a total thickness of 4mm, and a single-layer corrosion-resistant layer thereof has a thickness of $50 \mu m$.

It can be found by observation that in Example 3, the microstructure of the base layer in the pipe is ferrite+pearlite+bainite; the microstructure of the corrosion-resistant layer is austenite; correspondingly, in the present invention, the elements of the corrosion-resistant layer and the base layer diffuse at the bonding interface to form a stable transition layer, and the diffusion distance is about $50 \mu m$.

It should be noted that that the prior art portions in the protection scope of the present disclosure are not limited to the examples set forth in the present application file. All the prior art contents not contradictory to the technical solution of the present invention, including but not limited to prior patent literature, prior publications, prior public uses and the like, may all be incorporated into the protection scope of the present invention.

In addition, the ways in which the various technical features of the present invention are combined are not limited to the ways recited in the claims of the present invention or the ways described in the specific examples. All the technical features recited in the present invention may be combined or integrated freely in any manner, unless contradictions are resulted.

It should also be noted that the Examples set forth above are only specific examples of the present invention. Obviously, the present invention is not limited to the above Examples. Similar variations or modifications made thereto can be directly derived or easily contemplated from the contents disclosed by the present invention by those skilled in the art. They all fall within the protection scope of the present invention.

**Claims**

1. A pipe, wherein the pipe has a corrosion-resistant layer and a base layer in its thickness direction, and the corrosion-resistant layer is at least disposed on the inner wall of the pipe, and the corrosion-resistant layer further comprises, in addition to Fe and inevitable impurities, the following chemical elements in percentage by weight:

$$0 < C \leq 0.05\%;$$

Si: 0.3-0.6%;
Mn: 0.5-2.0%;
Ni: 8.00-14.00%;
Cr: 16.00-19.00%;
Mo: 2.00-3.50%;
N: 0.02-0.20%; and
Ti: 0.01-0.2%;
wherein Cr, Mo, N and Ti satisfy the following inequality: Cr+2.8 $\times$ Mo+ 16 $\times$ N + 2 $\times$ Ti $\geq$ 22.0%.

2. The pipe according to claim 1, wherein the corrosion-resistant layer consists of the following chemical elements in percentage by weight:

$$0 < C \leq 0.05\%;$$

Si: 0.3-0.6%;

Mn: 0.5-2.0%;
Ni: 8.00-14.00%;
Cr: 16.00-19.00%;
Mo: 2.00-3.50%;
N: 0.02-0.20%;
Ti: 0.01-0.2%; and
the balance of Fe and inevitable impurities;
wherein Cr, Mo, N and Ti satisfy the following inequality: $Cr+2.8 \times Mo+ 16 \times N + 2 \times Ti \geq 22.0\%$.

3. The pipe according to claim 1 or 2, wherein in the corrosion-resistant layer, the inevitable impurities include: $S \leq 0.030\%$; $P \leq 0.045\%$.

4. The pipe according to claim 1 or 2, wherein the base layer comprises the following chemical elements in percentage by weight:

C: 0.01-0.20%;
Si: 0.10-0.30%;
Mn: 0.50-1.50%;
Al: 0.02-0.03%;
Ti: 0.005-0.018%;
Nb: 0.005-0.020%;

$$N \leq 0.006\%;$$

and
the balance of Fe and inevitable impurities.

5. The pipe according to claim 4, wherein the base layer further comprises at least one of the following chemical elements:

$$0 < B \leq 0.0003\%;$$

$$0 < Ni \leq 0.20\%;$$

$$0 < Cr \leq 0.20\%;$$

$$0 < Mo \leq 0.10\%.$$

6. The pipe according to claim 4, wherein in the base layer, the inevitable impurities include: $S \leq 0.010\%$; $P \leq 0.015\%$.

7. The pipe according to claim 1 or 2, wherein the single-layer thickness of the corrosion-resistant layer accounts for 0.5-20% of the total thickness of the pipe.

8. The pipe according to claim 1 or 2, wherein the base layer has a microstructure of ferrite+pearlite or ferrite+pearlite+bainite, and the corrosion-resistant layer has a microstructure of austenite.

9. The pipe according to claim 1 or 2, wherein the pipe has a yield strength of $\geq 426MPa$, a tensile strength of $\geq 585MPa$, and an elongation of $\geq 35\%$, and the corrosion-resistant layer has an average corrosion rate of $\leq 0.05mm/year$ in an environment with a temperature of $\leq 40°C$ and a sodium hydroxide concentration of $\leq 30wt\%$.

10. A method for manufacturing the pipe according to anyone of claims 1-9, wherein the method comprises the steps of:

(1) providing a slab for a corrosion-resistant layer and a slab for a base layer;

(2) assembling the slab for a corrosion-resistant layer and the slab for a base layer to obtain a composite slab, wherein the single-layer thickness of the corrosion-resistant layer accounts for 0.5-20% of the total thickness of the composite slab;

(3) heating and rolling: heating the composite slab at a temperature of 1150-1230°C, followed by performing rolling in multiple passes, with a total rolling reduction rate of not lower than 90%, and a finish rolling temperature of not lower than 900°C;

(4) coiling: after water cooling, coiling at a temperature of 650-700°C to obtain a hot-rolled coil;

(5) subjecting the hot-rolled coil to a surface treatment; and

(6) making a pipe.

11. The method according to claim 10, wherein in step (3), the finish rolling temperature is 920-1050°C.

12. The method according to claim 10, wherein the method further comprises a preheating step between step (2) and step (3), wherein the preheating temperature is 1150-1230°C.

13. The method according to claim 10, wherein the method further comprises a cold rolling and annealing step between step (5) and step (6), preferably at an annealing temperature of 900-1000°C.

Figure 1

Figure 2

Figure 3

Figure 4

| **INTERNATIONAL SEARCH REPORT** | International application No. |
|---|---|
| | **PCT/CN2023/072769** |

**A. CLASSIFICATION OF SUBJECT MATTER**

C22C38/02(2006.01)i;C22C38/04(2006.01)i;C22C38/06(2006.01)i;C22C38/08(2006.01)i;C22C38/12(2006.01)i;C22C38/14(2006.01)i;C22C38/18(2006.01)i;C22C38/22(2006.01)i;C22C38/28(2006.01)i;C22C38/38(2006.01)i;B21B1/26(2006.01)i;B21B1/34(2006.01)i;B21B1/28(2006.01)i;B21B1/36(2006.01)i;C21D1/30(2006.01)i

According to International Patent Classification (IPC) or to both national classification and IPC

**B. FIELDS SEARCHED**

Minimum documentation searched (classification system followed by classification symbols)

IPC:C22C; B21B; C21D

Documentation searched other than minimum documentation to the extent that such documents are included in the fields searched

Electronic data base consulted during the international search (name of data base and, where practicable, search terms used)

CNTXT, CNKI, SIPOABS, DWPI, EPODOC: 包覆, 不锈钢, 镀层, 镀锌, 复合, 基材, 基体, 涂层, 铬, 硅, 氮, 锰, 镍, 钛, Clad, stainless steel, plated, galvanized, composite, substrate, matrix, coating, chrome, silicon, nitrogen, manganese, nickel, titanium,

**C. DOCUMENTS CONSIDERED TO BE RELEVANT**

| Category* | Citation of document, with indication, where appropriate, of the relevant passages | Relevant to claim No. |
|---|---|---|
| Y | CN 113106327 A (BAOSHAN IRON & STEEL CO., LTD.) 13 July 2021 (2021-07-13) description, paragraphs 9, 12, 46-51, 53, and 55-56 | 1-13 |
| Y | JP 06235050 A (NIPPON STEEL CORP.) 23 August 1994 (1994-08-23) description, paragraphs 12-19 | 1-13 |
| A | US 2023001504 A1 (BAOSHAN IRON & STEEL CO., LTD.) 05 January 2023 (2023-01-05) entire document | 1-13 |
| A | WO 2014148540 A1 (NIPPON STEEL & SUMIKIN STAINLESS STEEL CORPORATION) 25 September 2014 (2014-09-25) entire document | 1-13 |
| A | CN 110462087 A (JFE STEEL CORP.) 15 November 2019 (2019-11-15) entire document | 1-13 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **09 March 2023** | **16 March 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

### INTERNATIONAL SEARCH REPORT
**Information on patent family members**

International application No.

**PCT/CN2023/072769**

| Patent document cited in search report | | | Publication date (day/month/year) | Patent family member(s) | | | Publication date (day/month/year) |
|---|---|---|---|---|---|---|---|
| CN | 113106327 | A | 13 July 2021 | None | | | |
| JP | 06235050 | A | 23 August 1994 | None | | | |
| US | 2023001504 | A1 | 05 January 2023 | EP | 4067525 | A1 | 05 October 2022 |
| | | | | WO | 2021104417 | A1 | 03 June 2021 |
| | | | | JP | 2023503912 | A | 01 February 2023 |
| | | | | KR | 20220106149 | A | 28 July 2022 |
| WO | 2014148540 | A1 | 25 September 2014 | JPWO | 2014148540 | A1 | 16 February 2017 |
| | | | | JP | 6149102 | B2 | 14 June 2017 |
| CN | 110462087 | A | 15 November 2019 | JPWO | 2018181381 | A1 | 27 June 2019 |
| | | | | JP | 6555435 | B2 | 07 August 2019 |
| | | | | EP | 3604597 | A1 | 05 February 2020 |
| | | | | EP | 3604597 | A4 | 19 October 2022 |
| | | | | KR | 20190129956 | A | 20 November 2019 |
| | | | | KR | 102259450 | B1 | 01 June 2021 |
| | | | | WO | 2018181381 | A1 | 04 October 2018 |

Form PCT/ISA/210 (patent family annex) (July 2022)